Europäisches Patentamt

European Patent Office

Office européen des brevets

(19)

(11) Numéro de publication: **0 060 773**
**B1**

## FASCICULE DE BREVET EUROPEEN

(12)

(45) Date de publication du fascicule du brevet:
11.07.84

(51) Int. Cl.³: **C 07 C 149/06**, C 07 F 7/22

(21) Numéro de dépôt: **82400427.9**

(22) Date de dépôt: **09.03.82**

(54) **Synthèse de tétra mercaptides stanniques.**

(30) Priorité: **12.03.81 FR 8104965**

(43) Date de publication de la demande:
**22.09.82 Bulletin 82/38**

(45) Mention de la délivrance du brevet:
**11.07.84 Bulletin 84/28**

(84) Etats contractants désignés:
**AT BE CH DE GB IT LI NL SE**

(56) Documents cités:
**FR - A - 2 401 950**
**US - A - 2 888 435**

(73) Titulaire: **SOCIETE NATIONALE ELF AQUITAINE, Tour Aquitaine - Cédex 4, F-92080 Paris la Défense (FR)**

(72) Inventeur: **Pereyre, Michel, 45 Rue du Haut-Carré, F-33400 Talence (FR)**
Inventeur: **Pommier, Jean-Claude, 35 Allée de Gascogne, F-33170 Gradignan (FR)**

(74) Mandataire: **Ourgaud, Janine, Société Nationale ELF-Aquitaine Division Propriété Industrielle Tour Aquitaine Cédex 4, F-92080 Paris la Défense (FR)**

## Description

La présente invention a pour objet un nouveau procédé pour la production de mercaptides stanniques.

Des mercaptides de l'étain tétravalent présentent un intérêt industriel, particulièrement pour la stabilisation de résines renfermant un halogène, et surtout du chlorure de polyvinyle qui est fabriqué à grande échelle. Les tétra-mercaptides deviennent, à l'heure actuelle, d'autant plus intéressants qu'un nouveau procédé de stabilisation, mis au point par la demanderesse, prévoit l'utilisation de ces composés conjointement avec des éthers-couronne, comme décrit dans la demande de brevet français 7911248. Il est donc important de posséder un procédé de fabrication économique de tels mercaptides, suffisamment purs. Or, les procédés existants ne satisfont pas à ces désiderata industriels. En effet, les seules synthèses, connues jusqu'à présent, consistaient à faire réagir du tétrachlorure d'étain anhydre, $SnCl_4$, avec un mercaptide, notamment alcalin ou alcalinoterreux, souvent produit in situ, le produit de départ étant un mercaptan utilisé en présence d'une base minérale ou organique. Ainsi, selon H. J. Backer (Rec. Trav. Chim. 52, 916 de 1933 et ibid 53, 1101 de 1934) opère-t-on avec le mercaptide de Na, $4RSNa + SnCl_4 \rightarrow Sn(SR)_4$. Le brevet US 2 726 227 décrit la préparation de $Sn(SC_{12}H_{25})_4$ par chauffage de $SnCl_4$ avec du dodécanethiol. La même réaction, mais en présence d'une base organique, est décrite par MEHROTRA et coll. dans J. Inorg. Nucl. Chem. 29, 1577 de 1967; la base organique est de l'éthylène diamine, selon le brevet DE 2 302 749.

Les procédés de la technique connue présentent tous différents inconvénients. Un des principaux réside en ce qu'on est obligé d'opérer en plusieurs étapes, en isolant au préalable le mercaptide de la base choisie, notamment de Na, avant de le faire réagir avec le chlorure stannique. D'autre part, l'utilisation de $SnCl_4$ comporte des difficultés de manipulation de ce composé corrosif et fumant. En outre, des traitements plus ou moins compliqués sont nécessaires pour séparer les produits obtenus pour récupérer le chlorure stannique et le dérivé thio organique qui n'ont pas réagi; or, étant donné les rendements relativement faibles, généralement inférieurs à 60%, et la cherté des composés de l'étain, la récupération du $SnCl_4$, en vue de ce recyclage est indispensable.

La présente invention apporte un perfectionnement sensible à la technique de production de tétra mercaptides de Sn, par la suppression des inconvénients sus-mentionnés. Elle permet en effet d'opérer en une seule étape, sans réactif difficile à manipuler, et de séparer et recycler facilement les composants qui n'ont pas réagi.

Le nouveau procédé, suivant l'invention, est caractérisé en ce qu'un mercaptan est chauffé avec des particules d'étain métallique, après quoi, le métal qui n'a pas réagi est séparé mécaniquement du milieu réactionnel. Le mercaptide, ainsi obtenu, est séparé, à la manière habituelle, du mercaptan résiduel, cette séparation étant réalisée selon les cas par distillation, ou précipitation.

Le procédé suivant l'invention s'applique à la préparation de différents mercaptides, notamment à celle des tétra mercaptides du type $Sn(SR)_4$ où R est un groupe hydrocarboné, pouvant porter différentes fonctions, par exemple un groupe carboxy, hydroxy, carbonyle ou autres. Plus particulièrement le groupe hydrocarboné est aliphatique ou cycloaliphatique. Ainsi, le procédé, suivant l'invention, s'applique très avantageusement à la préparation de tétra mercaptides, dans lesquels R est une chaîne aliphatique, linéaire ou ramifiée en $C_4$ à $C_{18}$, ou bien un groupe cycloaliphatique en $C_5$ à $C_{12}$.

La température à laquelle le mercaptan doit être chauffé avec de l'étain métallique, pour donner naissance à une proportion pratiquement intéressante de tétra mercaptides, dépend de la nature du mercaptan mis en jeu, de la finesse des particules de l'étain, de la vitesse d'agitation et d'une éventuelle présence d'un solvant; d'une façon générale, cette température se situe le plus souvent entre 150°C et 200°C et plus spécialement entre 170° et 190°C.

Il est possible d'employer l'étain métallique sous la forme de grains, dont les dimensions vont depuis 1 micron jusqu'à plusieurs mm de diamètre, par exemple 1 micron à 5 mm; cependant, pour la pratique courante, les dimensions les plus avantageuses se situent entre 10 et 500 microns. La vitesse de réaction croît avec la finesse de ces grains. Par conséquent, la durée de chauffage est variable selon la grosseur des particules de Sn et la température choisie: le plus souvent ce chauffage est prolongé pendant 6 à 60 heures.

Bien que la réaction puisse être réalisée avec les proportions stoéchiométriques, c'est-à-dire avec un atome d'étain pour 4 moles de mercaptan, correspondant à l'équation théorique $Sn + 4RSH \rightarrow Sn(SR)_4 + 2H_2$, il est préférable d'opérer avec un excès de métal, ce qui améliore le rendement et accélère la réaction. Ainsi, peut-on utiliser 1 à 4 atomes de Sn pour 4 moles de mercaptan et, de préférence, 1,5 à 3 atomes de Sn; étant donné l'extrême facilité avec laquelle l'excès de Sn peut être séparé, par simple filtration, du milieu réactionnel, l'utilisation d'un excès de poudre métallique ne crée aucune difficulté. Les rendements, par rapport au mercaptan mis en œuvre, sont généralement de l'ordre de 50 à 60%, mais aucun des réactifs n'est perdu, car il est très aisé de séparer et recycler l'étain, comme il vient d'être décrit, de même que le mercaptan de départ, dont la séparation ne présente pas de difficulté.

L'invention est illustrée, non limitativement, par les exemples qui suivent.

Exemple 1

Préparation du tétra lauryl mercaptide d'étain

A 8,1 g de lauryl-mercaptan $C_{12}H_{25}SH$, soit 40

mmol, on ajoute 1,8 g d'étain, c'est-à-dire 15 m. at. g. sous la forme d'une poudre dont les particules ont des grosseurs d'environ 50 à 200 microns; le mélange est chauffé à 180°C, sous une agitation continue, pendant 44 heures. La solution prend peu à peu une coloration jaune qui vire au noir au bout de 5 à 10 minutes.

A la fin du chauffage, après refroidissement, la solution prend en masse; on ajoute alors du pentane jusqu'à dissolution et l'on filtre pour séparer l'étain n'ayant pas réagi. Le filtrat est soumis à l'évaporation sous le vide d'une trompe à eau, ce qui donne lieu à la précipitation d'un solide blanc. Après trois autres dissolutions dans le pentane suivies de précipitations sous vide, on recueille 5,6 g de tétralaurylmercaptide d'étain; cela représente un rendement de 61 % en produit purifié par rapport au lauryl-mercaptan de départ.

Le mercaptide obtenu, $(C_{12}H_{25}S)_4Sn$, fond à 37°C et son examen en résonnance magnétique nucléaire donne: RMN [1]H Triplet à 2,70 ppm (-$CH_2$S-); RMN[119]Sn 142,2 ppm (par rapport au tétra méthyl étain). L'analyse élémentaire indique:

|  | C% | H% | Sn% | S% |
|---|---|---|---|---|
| calculé | 62,40 | 10,83 | 12,89 | 13,86 |
| trouvé | 62,78 | 10,45 | 12,60 | - |

Exemple 2

Préparation de tétra n.octyl-mercaptide d'étain Un mélange de 5,84 g de n.octyl-mercaptan, soit 40 mmol, avec 1,8 g, c'est-à-dire 15 m. at. g. de poudre d'étain de la même finesse qu'à l'exemple 1, est chauffé à 180°C, pendant 48 h. Le liquide visqueux, ainsi obtenu, est dissous dans du pentane et la solution est filtrée pour séparer l'excès d'étain. Après l'évaporation du pentane, sous un vide de la trompe à eau, on élimine l'octyl-mercaptan n'ayant pas réagi par distillation sous un vide de 0,1 à 1 mm Hg.

On récupère ainsi 4,11 g de liquide visqueux, identifié au tétra octylmercaptide d'étain: le rendement, par rapport au mercaptan de départ, ressort donc à 59%.

L'examen en résonnance magnétique nucléaire indique: RMN[1]H Triplet à 2,76 ppm (-$CH_2$S-); RMN[119]Sn 144,0 ppm (par rapport au tétraméthyl-étain).

L'analyse élémentaire indique bien que le corps obtenu est du $(C_8H_{17}S)_4Sn$

|  | C% | H% | Sn% | S% |
|---|---|---|---|---|
| calculé | 54,93 | 9,73 | 17,02 | 18,31 |
| trouvé | 55,92 | 10,01 | 15,90 | 17,98 |

Exemple 3

Préparation de tétra cyclohexyl-mercaptide d'étain

Un mélange de 4,64 g de cyclohexyl-mercaptan, soit 40 mmol, avec 1,8 g, c'est-à-dire 15 m. at. g. d'étain en poudre, est chauffé à 180°C, pendant 48 h.

Au terme du chauffage, le milieu réactionnel est additionné de pentane, et la solution obtenue est filtrée de façon à séparer l'excès d'étain. Le pentane est ensuite éliminé par évaporation sous vide, et l'on obtient un produit solide, blanc. On lave ce produit plusieurs fois avec du méthanol et on le sèche. On obtient ainsi 2,8 g de cristaux de tétra cyclohexyl-mercaptide d'étain, ce qui correspond à un rendement en produit pur, par rapport cyclohexyl-mercaptan engagé, de 49%. Le tétra mercaptide obtenu fond à 58°C et son examen en résonnance magnétique nucléaire indique: RMN[1]H massif large entre 2,7 et 3,2 ppm (-$CH_2$S-); RMN[119]Sn 111,9 ppm (par rapport au tétra méthyl-étain).

L'analyse élémentaire donne $(C_6H_{11}S)_4Sn$ pour le produit obtenu:

|  | C% | H% | Sn% | S% |
|---|---|---|---|---|
| calculé | 49,74 | 7,59 | 22,10 | 20,55 |
| trouvé | 49,78 | 7,75 | 21,65 | 21,77 |

**Revendications**

1. Procédé de préparation de tétra mercaptides stanniques à partir de mercaptans correspondants, caractérisé en ce que le mercaptan est chauffé avec de l'étain métallique.

2. Procédé suivant la revendication 1, caractérisé en ce que l'étain est sous la forme de particules de 1 micron à 5 mm et, de préférence, de 10 à 500 microns.

3. Procédé suivant la revendication 1 ou 2, caractérisé en ce que le chauffage est effectué à une température de 150 à 200°C et, de préférence, entre 170° et 190°C.

4. Procédé suivant une des revendications précédentes, caractérisé en ce que la proportion d'étain est de 1 à 4 atomes pour 4 moles de mercaptan et, de préférence, de 1,5 à 3 atomes Sn pour 4 moles de mercaptan.

5. Procédé suivant une des revendications précédentes, caractérisé en ce que l'étain qui n'a pas réagi est séparé par filtration pour être réutilisé dans une nouvelle opération.

6. Procédé suivant la revendication 5, caractérisé en ce que le milieu réactionnel est fluidifié par l'adjonction d'un solvant avant la filtration, en vue de la séparation de l'étain qui n'a pas réagi.

7. Procédé suivant une des revendications précédentes, caractérisé en ce que la fraction de mercaptan qui n'a pas réagi est éliminée du milieu réactionnel pour être recyclée dans une nouvelle opération.

**Patentansprüche**

1. Verfahren zur Herstellung von Zinntetrathiolaten aus den entsprechenden Thiolen, dadurch gekennzeichnet, dass das Thiol mit metallischem Zinn erwärmt wird.

2. Verfahren nach Anspruch 1, dadurch gekennzeichnet, dass das Zinn in Form von Teilchen mit einer Grösse von 1 μm bis 5 mm und vorzugsweise von 10 bis 500 μm vorliegt.

3. Verfahren nach Anspruch 1 oder 2, dadurch gekennzeichnet, dass das Erwärmen bei einer Temperatur von 150 bis 200°C und vorzugsweise zwischen 170 und 190°C durchgeführt wird.

4. Verfahren nach einem der vorhergehenden Ansprüche, dadurch gekennzeichnet, dass der Anteil des Zinns 1 bis 4 mol Sn pro 4 mol Thiol und vorzugsweise 1,5 bis 3 mol Sn pro 4 mol Thiol beträgt.

5. Verfahren nach einem der vorhergehenden Ansprüche, dadurch gekennzeichnet, dass das Zinn, das nicht reagiert hat, durch Filtrieren abgetrennt wird, um in einem neuen Arbeitsgang wiederverwendet zu werden.

6. Verfahren nach Anspruch 5, dadurch gekennzeichnet, dass das Reaktionsmedium im Hinblick auf die Abtrennung des Zinns, das nicht reagiert hat, vor dem Filtrieren durch Zufügen eines Lösungsmittels verflüssigt wird.

7. Verfahren nach einem der vorhergehenden Ansprüche, dadurch gekennzeichnet, dass der Anteil des Thiols, der nicht reagiert hat, für die Zurückführung in einen neuen Arbeitsgang aus dem Reaktionsmedium entfernt wird.

## Claims

1. Process for the preparation of stannic tetramercaptides from the corresponding mercaptans, characterised in that the mercaptan is heated with metallic tin.

2. Process according to claim 1, characterised in that the tin is in the form of particles having a size from 1 micron to 5 mm, and preferably from 10 to 500 microns.

3. Process according to claim 1 or 2, characterised in that the heating is carried out at a temperature from 150 to 200°C, preferably between 170 and 190°C.

4. Process according to any one of the preceding claims, characterised in that the proportion of tin is from 1 to 4 atoms per 4 moles of mercaptan and, preferably, 1.5 to 3 atoms Sn per 4 moles of mercaptan.

5. Process according to any one of the preceding claims, characterised in that the tin which has not reacted is separated by filtration to be used in a further operation.

6. Process according to claim 5, characterised in that the reaction medium is fluidised by the addition of a solvent before filtration, so as to separate out tin which has not reacted.

7. Process according to any one of the preceding claims, characterised in that the proportion of mercaptan which has not reacted is removed from the reaction medium to be recycled to a further operation.